# EUROPÄISCHE PATENTANMELDUNG

(11) **EP 2 381 187 A2**
(43) Veröffentlichungstag der Anmeldung: **26.10.2011**
(21) Anmeldenummer: 11163689.0
(22) Anmeldetag: 26.04.2011
(51) Int. Cl.: F24J 2/24, F24J 2/26

(54) **Absorber**

(30) Priorität: 26.04.2010 DE 202010005305 U
(71) Anmelder: SCHÜCO International KG, 33609 Bielefeld (DE)
(72) Erfinder: ROSENWIRTH, Andreas, 32130, Enger (DE)
(74) Vertreter: Dantz, Jan Henning

(57) **Zusammenfassung**

Ein Absorber (10) mit einem wetterseitigen, zumindest teilweise sich über den Absorber (10) erstreckenden Absorberblech (27) und einem daran angrenzenden Wärmeleitblech (16 - 26) und mit wenigstens einer von einem Wärmeträgermedium durchströmbare Absorberleitung, die von dem Wärmeleitblech (16 ― 26) wenigstens teilweise umhüllt ist, soll insbesondere für Großanlagen so ausgelegt werden, dass in konstruktiv einfacher und materialsparender Weise und demzufolge auch kostengünstigerweise die Absorberleitung effizienter gestaltet werden kann.

Erfindungsgemäß ist vorgesehen, dass die Absorberleitung aus mindestens zwei Leitungsabschnitten (11, 12, 13, 14) besteht, deren Endbereiche in Sammelrohre (15, 28) einmünden. Die Querschnitte der Sammelrohre (15, 28) sind größer als die Querschnitte der Leitungsabschnitte (11, 12, 13, 14). Die hydraulischen Querschnitte aller Leitungsabschnitte (11 - 14) sind unterschiedlich und an die Längen der Leitungsabschnitte (11, 12, 13, 14) angepasst.

Der Absorber (10) ist in bevorzugter Ausführung ein Sonnenkollektor.

## Beschreibung

Die Erfindung betrifft einen Absorber mit einem wetterseitigen, zumindest teilweise sich über den Absorber erstreckenden Absorberblech, einem daran angrenzenden Wärmeleitblech und mit wenigstens einer von einem Wärmeträgermedium durchströmbaren Absorberleitung, die von dem Wärmeleitblech wenigstens teilweise umhüllt ist.

Der Absorber ist in bevorzugter Ausführung ein Sonnenkollektor. Der Absorber ist derart ausgelegt, dass Sonnenlicht bzw. Sonnenenergie in Wärme umgewandelt wird, wobei die Absorberleitung durch ein von dem Wärmeträgermedium durchströmtes Rohr ist. Dadurch erfolgt ein Energietransport durch die Wärmemitnahme. Ein derartiger Absorber ist aus der DE 10 2008 022 391 A1 bekannt.

Die Absorber sind in drei verschiedenen Ausführungen bekannt.

In einer ersten Ausführungsform ist ein sogenannter Mäanderabsorber bekannt, bei dem der Strömungskanal aus einem endlichen Rohrabschnitt besteht, wobei die einzelnen Abschnitte im ständigen Wechsel gegensinnig abgebogen sind, wobei die Übergänge in einem Bogen bzw. Radius verlaufen, Diese Ausführungsform ist nicht für Großanlagen geeignet, wobei unter einer Großanlage eine solche Anlage zu verstehen ist, bei der normalerweise mehr als vier Absorber in Reihe geschaltet sind. Durch die Länge dieses Strömungskanales ist der Druckverlust relativ groß, so dass ein solcher Absorber keine optimale Energiequelle ist.

Eine zweite Ausführung ist der sogenannte Harfenabsorber, der mit zwei parallel und im Abstand zueinander verlaufenden Sammelrohren versehen ist. Zwischen diesen Sammelrohren sind einzelne Durchströmkanäle vorgesehen, die schräg zu den Sammelrohren stehen.

Nachteilig ist bei dieser Ausführung, dass die Herstellkosten aufgrund des relativ hohen Materialbedarfs entsprechend hoch sind. Ferner ist die Durchströmung nicht optimal. Sind beispielsweise zehn Absorber in Reihe geschaltet, werden die ersten drei bis vier Absorber und die letzten drei bis vier Absorber relativ optimal durchströmt, die im mittleren Bereich der Reihenanordnung angeordneten Absorber dagegen schlechter, da man davon ausgehen kann, dass es zu einer Staubildung kommt.

Eine dritte Ausführung ist ein Absorber, der als Sammelrohrmäander bezeichnet wird. Auch diese Ausführung enthält zwei parallel und im Abstand zueinander verlaufende Sammelrohre, an die die Endbereiche des Strömungskanales angeschlossen sind. Dieser Strömungskanal verläuft mäanderförmig, wobei jedoch, mit Ausnahme der Bereich der Richtungsänderung, die Abschnitte parallel und im Abstand zueinander sowie zu den Sammelrohren verlaufen. Diese Ausführung ist für die bereits erwähnten Großanlagen geeignet, ist aber aufgrund des hohen Materialbedarfs relativ kostenintensiv. Außerdem ist aufgrund der Ausdehnung zwischen den einzelnen Absorbern ein Kompensator oder ein Ausdehnungsgefäß notwendig.

Der Erfindung liegt die Aufgabe zugrunde, einen Absorber, insbesondere für Großanlagen, so auszulegen, dass in konstruktiv einfacher und materialsparender Weise und demzufolge auch kostengünstigerweise die Absorberleitung effizienter gestaltet werden, und dass trotzdem die Herstellung in einfachster Weise erfolgen kann, und dass ferner die Druckverluste vermindert werden.

Die gestellte Aufgabe wird gelöst, indem die Absorberleitung aus mindestens zwei Leitungsabschnitten besteht, deren Endbereiche in gemeinsame Sammelrohre einmünden, und dass die Leitungsabschnitte U-förmig gestaltet sind sowie parallel und im Abstand zueinander verlaufen. Durch die erfindungsgemäße Gestaltung des Absorbers wird eine vierte Ausführung geschaffen, die auch als U-Absorber bezeichnet werden könnte.

Durch die U-förmig gestalteten Leitungsabschnitte sind diese deutlich kürzer als wenn die einzige Absorberleitung aus einer Vielzahl von Windungen besteht. Dadurch wird der Druckverlust deutlich vermindert. Ein weiterer Vorteil ist auch noch darin zu sehen, dass bei Großanlagen zwischen den einzelnen Absorbern auf Kompensatoren verzichtet werden kann. Der Materialbedarf wird ebenfalls verringert, so dass eine kostengünstige Herstellung gegeben ist, Dies trifft insbesondere deshalb zu, weil die Absorberleitungen bzw. die Leitungsabschnitte aus Kupferrohren hergestellt werden, welches ein hochwertiges Material und demzufolge entsprechend kostenintensiv ist. Damit der Abfluss des in das Sammelrohr eingeleiteten Wärmeträgermediums ohne Staubildung erfolgen kann, ist vorgesehen, dass die Querschnitte der Sammelrohre größer sind als die Querschnitte der U-förmigen Leitungsabschnitte. Ein Sammelrohr dient dem Zulauf des Wärmeträgermediums und das andere dem Abfluss des Wärmeträgermediums.

In weiterer Ausgestaltung ist vorgesehen, das die Leitungsabschnitte von der Kreisringform abweichende Querschnitte aufweisen. Dabei ist dann vorgesehen, dass die Querschnitte der Leitungsabschnitte durch Kaltverformung von Rohren mit kreisringförmigen, vorzugsweise mit gleichen Querschnitten gebildet sind. Dabei wird eine Kaltverformung so vorgenommen, dass die hydraulischen Querschnitte aller Leitungsabschnitte unterschiedlich sind, wobei diese hydraulischen Querschnitte von den Längen der Leitungsabschnitte abhängig sind.

Bei Rohren mit kreisringförmigen Querschnitten können Druckverluste und Strömungsgeschwindigkeiten errechnet werden. Bei von der Kreisringform abweichenden Querschnitten ist der hydraulische Durchmesser eine theoretische Größe um Berechnungen an Rohren oder Kanälen mit von der Kreisringform abweichenden Querschnitten durchzuführen. Nach dieser Berechnung kann dann wie bei einem Rohr mit kreisringförmigem Querschnitt gerechnet werden. Der hydraulische Durchmesser ergibt sich aus dem Quotienten des vierfachen Strömungsquerschnittes und dem vom Fluid benetzten Umfang eines gemessenen Querschnittes. Um die hydraulischen Querschnitte längenabhängig zu bestimmen, ist vorgesehen, dass die hydraulischen Querschnitte von den Längskanten des Absorbers zur Mitte hin sich verkleinern, wobei die senkrecht zum Absorberblech stehenden Achsen sich verkürzen. Anders ausgedrückt wird bei Rohren mit kreisringförmigen Querschnitten zur Verringerung der hydraulischen Querschnitte eine stärkere Verformung vorgenommen.

Gemäß einer Alternativlösung ist vorgesehen, dass die Querschnitte der Leitungsabschnitte kreisringförmig sind, wobei zumindest die Innendurchmesser der Leitungsabschnitte von den Längskanten des Absorbers sich zur Mitte hin verkleinern. Üblicherweise verkleinern sich dann auch die Außendurchmesser, da die Durchmesser der Rohre, bezogen auf den Innen- oder Außendurchmesser sich relativ gering verkleinern und die Wanddicken gleich sind.

Gemäß einer weiteren Lösung können auch Leitungsabschnitte mit kreisringförmigen Querschnitten mit gleichen Innendurchmessern verwendet werden. Zur Regelung der Durchflussmenge ist dann vorgesehen, dass diese Durchflussmenge durch im Mündungsbereich zwischen einem Sammelrohr und den Lettungsabschnitten jeweils, eines Endbereiches der Leitungsabschnitte ein Regelventil angeordnet ist. Gemäß einer einfacheren Lösung ist vorgesehen, die Durchflussmenge des Wärmeträgermediums durch im Mündungsbereich zwischen dem Sammelrohre und den Leitungsabschnitten durch Bohrungen mit unterschiedlichen Durchmessern einzustellen. Die Durchmesser dieser Bohrungen verringern sich auch von einer Längskante zum mittleren Bereich des Absorbers.

Anhand der beiliegenden Zeichnungen wird die Erfindung noch näher erläutert.

Es zeigen:
- Figur 1: einen Absorber in einer Unteransicht, mit Blick auf die Wärmeleitbleche, rein schematisch und
- Figur 2: einen Schnitt durch die linke Hälfte des Absorbers gemäß der Figur 1, rein schematisch.

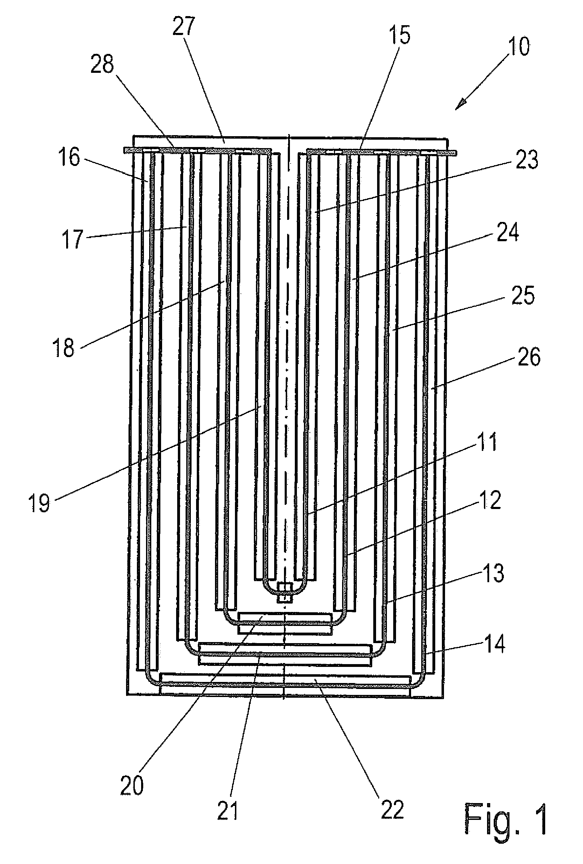

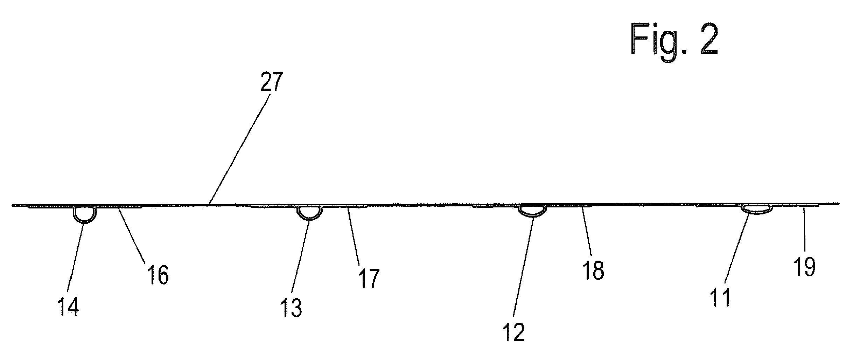

Der in der Figur 1 dargestellte Absorber 10 ist rechteckförmig gestaltet, wobei die Länge deutlich größer ist als die Breite. Im dargestellten Ausführungsbeispiel besteht die Absorberleitung aus vier U-förmig gestalteten Leitungsabschnitten 11, 12,13,14, wobei die drei Schenkel parallel im Abstand zueinander verlaufen. Wetterseitig bzw sonnenseitig ist der Absorber 10 mit einem Absorberblech 27 versehen, wobei die Längs- und Querkanten die aus den Leitungsabschnitten 11, 12, 13, 14 gebildete Kontur ein klein wenig überschreiten, Die Absorberleitungen 11, 12,13,14 verlaufen in gleichen Abständen zueinander. Wie die Figur 1 in Verbindung mit der Figur 2 zeigt, sind die Teilabschnitte der Leitungsabschnitte 11,12, 13, 14 von Wärmeleitblechen 16 - 26 umhüllt, wobei die Längskanten parallel und im Abstand zu den Leitungsabschnitten 11, 12,13,14 verlaufen. Die freien Endbereiche der Leitungsabschnitte 11, 12, 13, 14 münden in Sammelrohre 15, 28 ein, wobei ein Sammelrohr für den Zulauf des Wärmeträgermediums und das andere Sammelrohr für den Abfluss des Wärmeträgermediums ausgelegt ist. Wie die Figur 1 deutlich zeigt, stehen die einander zugewandten Enden der Sammelrohre 15, 28 mit den beiden Teilabschnitten des inneren Leitungsabschnittes 11 leitend in Verbindung. Die freien Enden der anderen Leitungsabschnitte 12, 13, 14 münden in die Sammelrohre 15 und 28 ein. Ein Sammelrohr 15 oder 28 ist für den Zufluss des Wärmeträgermediums und das andere Sammelrohr 28 oder 15 für den Abfluss des Wärmeträgermediums vorgesehen.

Der Absorber 10 ist mit einem Absorberblech 27 versehen, und mit diesem Absorberblech 27 sind die Wärmeleitbleche 16 - 26 verbunden,

Wie die Figur 2 zeigt, sind die Leitungsabschnitte 11-14 an der den Wärmeleitblechen 1 6 - 26 zugewandten Seite mit ebenen Flächen versehen, die durch Kaltverformung von Rohren mit kreisringförmigen Querschnitten gebildet sind. Die Figur 2 zeigt ferner, dass sich die hydraulischen Querschnitte von den Längskanten des Absorbers 10 zur Mitte hin sich verkleinern, indem die vertikal zum Absorberblech 27 stehenden Achsen sich von den Längskanten zur Mitte hin verringern.

Die Leitungsabschnitte 11 - 14 bestehen aus Kupfer, welches eine gute Wärmeleitfähigkeit und eine Korrosionsbeständigkeit bietet. Die Innendurchmesser der Rohre für die Herstellung der Leitungsabschnitte 11 - 14 können beispielsweise 10 mm betragen.

Die Erfindung ist nicht auf das dargestellte Ausführungsbeispiel beschränkt. Wesentlich ist, dass die Absorberleitung aus mindestens zwei Leitungsabschnitten 11, 12, 13, 14 besteht, und dass diese Leitungsabschnitte U-förmig gestaltet sind.

## Patentansprüche

1. Absorber (10) mit einem wetterseitigen, zumindest teilweise sich über den Absorber (10) erstreckenden Absorberblech (27), einem daran angrenzenden Wärmeleitblech (16 - 26) und mit wenigstens einer von einem Wärmeträgermedium durchströmbare Absorberleitung, der von dem Wärmeleitblech (16 - 26) wenigstens teilweise umhüllt ist, **dadurch gekennzeichnet, dass** die Absorberleitung aus mindestens zwei Leitungsabschnitten (11, 12, 13, 14) besteht, deren Endbereiche in Sammelrohre (15, 28) einmünden, und dass die Leitungsabschnitte (11,12,13, 14) U-förmig gestaltet sind und die einzelnen Teilabschnitte parallel und im Abstand zueinander verlaufen.

2. Absorber nach Anspruch 1, **dadurch gekennzeichnet, dass** die Querschnitte der Sammelrohre (15, 28) größer sind als die Querschnitte der Leitungsabschnitte (11, 12, 13, 14).

3. Absorber nach Anspruch 1, **dadurch gekennzeichnet, dass** die hydraulischen Querschnitte aller Leitungsabschnitte (11 - 14) unterschiedlich sind, wobei diese hydraulischen Querschnitte den Längen der Leitungsabschnitte (11 - 14) angepasst sind.

4. Absorber nach Anspruch 3, **dadurch gekennzeichnet, dass** die hydraulischen Querschnitte der Leitungsabschnitte (11 - 14) von den Längskanten des Absorbers (10) zur Mitte hin sich verkleinern.

5. Absorber nach Anspruch 4, **dadurch gekennzeichnet, dass** die senkrecht zum Absorberblech (27) stehenden Achsen der Leitungsabschnitte (11 - 14) zur Mitte hin sich verkürzen.

6. Absorber nach einem oder mehreren der vorstehenden Ansprüche, **dadurch gekennzeichnet, dass** die Leitungsabschnitte (11 - 14) durch Kaltverformung von Rohren mit kreisringförmigen Querschnitten gefertigt sind.

7. Absorber nach Anspruch 1, **dadurch gekennzeichnet, dass** die Querschnitte der Leitungsabschnitte (11 - 14) kreisringförmig sind, und dass zumindest die Innendurchmesser der Leitungsabschnitte (11-14) von den Längskanten des Absorbers (10) sich zur Mitte hin verkleinern.

8. Absorber nach Anspruch 1, **dadurch gekennzeichnet, dass** die Durchflussmenge des Wärmeträgermediums durch im Mündungsbereich zwischen wenigstens einem Sammelrohr (15, 28) und jeweils einem Endbereich der Leitungsabschnitte (11 - 14) durch ein Regelventil regelbar ist.

9. Absorber nach Anspruch 1, **dadurch gekennzeichnet, dass** die Durchflussmenge des Wärmeträgermediums durch im Einmündungsbereich eines Endbereiches der Leitungsabschnitte (11, 14) in wenigstens ein Sammelrohr (15, 28) vorgesehene Bohrungen mit von den Längskanten des Absorbers zur Mitte hin geringeren Durchmessern bestimmt ist.
